# EUROPÄISCHE PATENTSCHRIFT

(11) **EP 1 539 512 B1**
(45) Veröffentlichungstag und Bekanntmachung des Hinweises auf die Patenterteilung: **04.07.2007**
(21) Anmeldenummer: 03797267.6
(22) Anmeldetag: 05.09.2003
(51) Int. Cl.: B60F 1/04

(54) **ZWEIWEGEFAHRZEUG MIT EINER ANTRIEBSEINRICHTUNG FÜR DEN SCHIENENBETRIEB**
ROAD-RAIL VEHICLE COMPRISING A DRIVE DEVICE FOR OPERATING ON RAILS
VEHICULE RAIL-ROUTE EQUIPE D'UN SYSTEME D'ENTRAINEMENT PERMETTANT LE FONCTIONNEMENT SUR RAILS

(30) Priorität: 16.09.2002 DE 20214353 U
(43) Veröffentlichungstag der Anmeldung: 15.06.2005
(73) Patentinhaber: Zappel, Wolfgang, 74906 Bad Rappenau-Grombach (DE)
(72) Erfinder: Zappel, Wolfgang, 74906 Bad Rappenau-Grombach (DE)
(74) Vertreter: Kesselhut, Wolf
(86) Internationale Anmeldenummer: PCT/EP2003/009849
(87) Internationale Veröffentlichungsnummer: WO 2004/026599

(56) Entgegenhaltungen:
- EP-A- 1 136 288
- CH-A- 200 305
- US-A- 5 868 078

## Beschreibung

Die Erfindung betrifft ein Zweiwegefahrzeug, insbesondere einen Zweiwege-Lastkraftwagen, mit einer Antriebseinrichtung für den Schienenbetrieb, gemäß dem Oberbegriff von Anspruch 1.

Zweiwegefahrzeuge werden auf privaten oder öffentlichen Schienennetzen für Rangierarbeiten von Eisenbahnwaggons, Gleisarbeiten, Bauarbeiten an Bahndämmen etc. eingesetzt, und weisen zusätzlich zu ihrer Gummibereifung für herkömmliche Straßen ein Fahrgestell mit vier an die Breite des jeweiligen Schienennetzes angepassten Schienenrädern auf, welche sie dazu in die Lage versetzen, dass sich die Fahrzeuge nach dem Ausfahren der Schienenräder entlang der Gleise des Schienennetzes fortbewegen können.

Bei Fahrzeugen, wie LKW's, die eine andere Spurweite als die Schienen besitzen, erfolgt die Umstellung auf den Schienenbetrieb dadurch, dass das Fahrgestell mit den Schienenrädern über Betätigungseinrichtungen in Form von Hydraulik- oder Pneumatikzylindern ausgefahren, und das Fahrzeug hierdurch über die Schienen angehoben wird, so dass sich die Straßen-Antriebsräder des Fahrzeugs in der Luft befinden.

Der Antrieb des Fahrzeugs beim Schienenbetrieb erfolgt mit Hilfe einer Antriebseinrichtung, welche eine Reibtrommel umfasst, die beim Anheben des Fahrzeuges in die Stellung für den Schienebetrieb gegen eines der Straßen-Antriebsräder des Fahrzeugs angestellt wird, und die die über die Straßen-Antriebsräder abgegebene Antriebsleistung über ein Getriebe auf das Schienen-Antriebsrad überträgt. Hierdurch lässt sich das Zweiwegefahrzeug durch Kuppeln und Schalten in der vom Straßenbetrieb her gewohnten Weise entlang der Schienen bewegen.

Die CH 200305 zeigt eine Einrichtung zur Umwandlung eines Straßenfahrzeuges in ein Schienenfahrzeug und umgekehrt, bei der die Übertragung der Antriebskraft von an der Einrichtung aufgenommenen Reibrollen über eine Reihe von Zahnradvorgelegen auf die Schienenräder erfolgt, wobei an der Einrichtung kein Reversiergetriebe vorgesehen ist, über welches sich die Drehrichtung der Schienen-Antriebsräder umschalten lässt.

Weiterhin zeigt die EP 01136288A2 einen Zweiwege-LKW, nach dem Oberbegriff von Anspruch 1, bei dem der Antrieb der Schienen-Antriebsräder über Hydraulikmotoren und Ketten erfolgt, denen Hydrauliköl über entsprechende Hydraulikpumpen zugeführt wird, die ihrerseits wiederum durch zugeordnete Reibtrommeln angetrieben werden, wobei auch hier kein mechanisches Reversiergetriebe vorgesehen ist, mit welchem sich die Drehrichtung der Schienen-Antriebsräder umschalten lässt.

In diesem Zusammenhang ergibt sich insbesondere bei LKW's das Problem, dass in mehreren Kilometern Entfernung liegende Orte, z.B. Baustellen am Schienenkörper, vom Standort des LKW aus nur in Vorwärtsrichtung angefahren werden können, und beim Fehlen einer Wendemöglichkeit in Rückwärtsrichtung wieder verlassen werden müssen.

Aufgrund der geringen Geschwindigkeit, die mit einem LKW infolge des vorgegebenen Untersetzungsverhältnisses des Fahrgetriebes bei der Rückwärtsfahrt auf der Straße lediglich erzielt werden kann, ergibt sich das Problem, dass der Rückweg von einer Schienenbaustelle zurück zum Ausgangspunkt eine erheblich größere Zeitdauer in Anspruch nimmt, als der Weg dorthin.

Zudem entsteht dadurch, dass der Motor des LKW bei der Rückwärtsfahrt zur Erzielung einer möglichst hohen Geschwindigkeit mit hoher Drehzahl betrieben wird, eine erhebliche Lärm- und Schadstoffbelastung, sowie ein erhöhter Materialverschleiß.

Demgemäß ist es eine Aufgabe der vorliegenden Erfindung, ein Zweiwegefahrzeug zu schaffen, welches diese Nachteile vermeidet.

Diese Aufgabe wird gemäß der Erfindung durch die Merkmale von Anspruch 1 gelöst.

Weitere Merkmale der Erfindung sind in den Unteransprüchen beschrieben.

Gemäß der Erfindung umfasst ein Zweiwegefahrzeug, insbesondere ein Zweiwege-Lastkraftwagen, eine Antriebseinrichtung für den Schienenbetrieb, die ein Schienen-Antriebsrad sowie eine mit dem Schienen-Antriebsrad über ein Getriebe gekoppelte Reibtrommel umfasst, welche zum Antrieb des Fahrzeugs beim Schienenbetrieb - bei dem die Straßen-Antriebsräder des Fahrzeugs vom Boden und von den Schienen abgehoben sind - durch eine Betätigungseinrichtung aus einer ersten Betriebsstellung für den Straßenbetrieb in eine zweite Betriebsstellung für den Schienenbetrieb verschwenkt, und an die Umfangsoberfläche eines Straßen-Antriebsrades angestellt wird.

Das Zweiwegefahrzeug zeichnet sich dadurch aus, dass das Getriebe ein mechanisches, als Zahnradgetriebe ausgebildetes Reversiergetriebe oder Umkehrgetriebe enthält, welches beispielsweise als ein in vielfältiger Weise aus dem Kraftfahrzeugbau her bekanntes Klauengetriebe ausgeführt sein kann, bei welchem bei einer vorgegebenen Drehrichtung des Straßen-Antriebsrades eine Umkehr der Drehrichtung des Schienen-Antriebsrades durch Umlegen eines zugehörigen Hebels oder einer Stelleinrichtung des Getriebes möglich ist, welche die Schaltklaue verschiebt.

Hierdurch ergibt sich der Vorteil, dass zum Heranfahren an eine Schienenbaustelle in größerer Entfernung sämtliche für den Vorwärtsbetrieb des Lastkraftwagens zur Verfügung stehenden Gänge über den gesamten Geschwindigkeitsbereich hinweg vollständig ausgenutzt werden können, sodass die Baustelle in bekannter Weise mit einer hohen Geschwindigkeit angefahren werden kann.

Zum Verlassen der Baustelle wird das Reversiergetriebe dann in die Rückwärts-Fahrslellung umgeschaltet, beispielsweise dadurch, dass die Schaltklaue in bekannter Weise mit einem ersten Zahnrad außer Eingriff und mit einem zweiten Zahnrad in Eingriff gebracht wird, wobei das zweite Zahnrad mit dem Schienenantriebsrad über einen Zahnradzug gekoppelt ist, welcher die Drehrichtung des Schienen-Antriebsrades in der für Reversiergetriebe bekannten Weise umkehrt. Hierdurch kann das Fahrzeug nach der Umstellung des Reversiergetriebes unter Ausnutzung aller für den Vorwärtsbetrieb des Fahrzeuges zur Verfügung stehenden Gänge mit hoher Geschwindigkeit im Rückwärtsbetrieb zum Ausgangspunkt zurückgefahren werden.

Demgemäß ergibt sich in vorteilhafter Weise eine erhebliche Verkürzung der Fahrzeiten, sowie ein stark verminderter Schadstoffausstoß und Materialverschleiß, da der Motor sowohl bei der Vorwärtsfahrt, als auch bei der Rückwärtsfahrt mit einer deutlich reduzierten Drehzahl in einem optimalen Arbeitsbereich betrieben werden kann.

Nach einer ersten Ausführungsform der Erfindung umfasst die Antriebseinrichtung ein um eine erste Schwenkachse schwenkbares Reversiergetriebegehäuse, welches das Reversiergetriebe enthält, sowie ein gegenüber dem Reversiergetriebegehäuse um eine zweite Schwenkachse verschwenkbares Reibtrommelgetriebegehäuse, in welchem ein Reibtrommelgetriebe, beispielsweise in Form von zwei kämmenden Zahnrädern oder auch in Form eines Zahnriemens oder einer Kette, enthalten ist, welches die Antriebsleistung von der Reibtrommel zur Antriebswelle des Reversiergetriebes hin überträgt.

Die erste Schwenkachse ist hierbei vorzugsweise unterhalb der Ladefläche des Fahrzeugs an dessen Rahmen in der Weise befestigt, dass das Reversiergetriebegehäuse mit dem daran drehbar aufgenommenen Schienen-Antriebsrad sich in der ersten Betriebsstellung im Wesentlichen parallel unterhalb der Ladefläche des Fahrzeugs zu dessen Ende hin erstreckt, und aus dieser erste Betriebsstellung durch die Betätigungseinrichtung in die im Wesentlichen senkrecht zur Ladefläche verlaufende zweite Betriebsstellung für den Schienenbetrieb verschwenkbar ist.

Die Länge des Reversiergetriebegehäuses und die Drehachse des Schienen-Antriebsrades sind vorzugsweise so bemessen, dass die Straßen-Antriebsräder des Fahrzeuges in dieser zweiten Betriebsstellung einige Zentimeter von der Oberseite der Schienen abgehoben sind, und sich das Fahrzeug allein auf den Schienenrädern abstützt. Hierbei kann es zur Erzielung einer erhöhten Standfestigkeit vorteilhaft sein, wenn das Reversiergetriebegehäuse geringfügig über die Vertikale hinaus zum Straßen-Antriebsrad hin verschwenkt wird.

Die zweite Schwenkachse, um die das Reibtrommelgetriebegehäuse gegenüber dem Reversiergetriebegehäuse verschwenkbar ist, fällt gemäß einer bevorzugten Ausführungsform der Erfindung mit der Drehachse der Abtriebswelle des Reibtrommelgetriebes zusammen. Hierdurch ergibt sich im Zusammenhang mit einem Zugelement, welches den Fahrzeugrahmen gelenkig mit dem Reibtrommelgetriebegehäuse verbindet, eine Anordnung, bei der durch lediglich eine einzige Betätigungseinrichtung die Antriebseinrichtung in der ersten Betriebsstellung platzschonend gestreckt unterhalb der Ladefläche des Fahrzeugs positioniert, das Reversiergetriebegehäuse in die zweite Betriebsstellung verschwenkt, und in dieser zweiten Betriebsstellung gleichzeitig die Reibtrommel bei ausgeschwenktem Reibtrommelgetriebegehäuse durch die Anpresskraft der Betätigungseinrichtung gegen das Straßen-Antriebsrad des Zweiwegefahrzeugs mit einer wohl definierten Anpresskraft angestellt werden kann.

Bei dieser Ausführungsform der Erfindung ergibt sich weiterhin der Vorteil, dass bei einer längenveränderlichen Ausgestaltung des Zugelements die Anpresskraft, mit der das Betätigungselement die Reibtrommel in der zweiten Betriebsstellung gegen das Straßen-Antriebsrad presst, auf einfache Weise eingestellt werden kann, um beispielsweise einer Abnahme der Reibkraft infolge einer Abnutzung der Straßen-Antriebsräder des Fahrzeugs entgegen zu wirken.

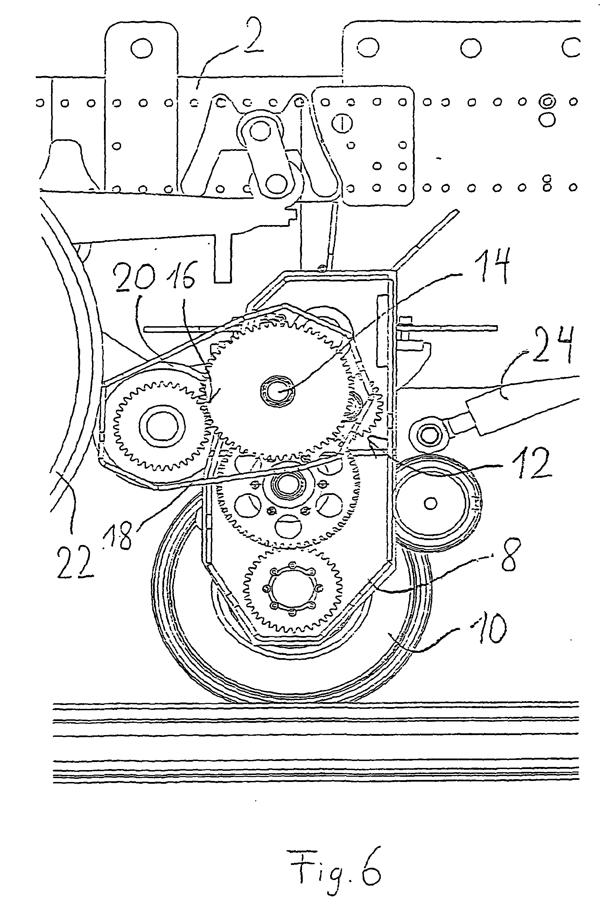

Die Kopplung des Schienen-Antriebsrades mit dem Abtrieb des Reversiergetriebes kann beispielsweise wie in Fig. 6 gezeigt über Zahnräder oder ein Zugmittel, beispielsweise eine Kette oder einen Zahnriemen, erfolgen. Die Ausgestaltung des Untersetzungsverhältnisses des Reversiergetriebes ist hierbei vorzugsweise derart, dass sich das Schienen-Antriebsrad sowohl in der Vorwärtsrichtung, als auch in der Rückwärtsrichtung des Reversiergetriebes mit im Wesentlichen derselben Umfangsgeschwindigkeit wie das Straßen-Antriebsrad des Fahrzeuges, bzw. die Umfangsoberfläche der Reibtrommel dreht. Das Reversiergetriebe kann hierbei in vorteilhafter Weise z.B. als ein 1:1-Getriebe ausgestaltet sein.

Hierdurch lassen sich im Schienenbetrieb mit dem Fahrzeug in Vorwärtsrichtung sowie auch in Rückwärtsrichtung im Wesentlichen die selben Geschwindigkeiten erzielen, wie sie mit dem Fahrzeug beim Straßenbetrieb in Vorwärtsrichtung erhalten werden können.

Die Antriebseinrichtung ist gemäß einer bevorzugten Ausführungsform der Erfindung vorzugsweise in Höhe des Straßen-Antriebsrades am Fahrzeug angeordnet, d.h. in der Regel am rechten oder linken Hinterrad des Fahrzeugs. Hierdurch ergibt sich ein sehr kompakter und stabiler Aufbau, bei welchem die Reibtrommel mit hoher Kraft und Präzision zuverlässig an das zugehörige Straßen-Antriebsrad angestellt werden kann und der Antrieb des Fahrzeuges durch das zugeordnete Schienen-Antriebsrad der Antriebseinrichtung erfolgt.

Gemäß einer weiteren Ausführungsform der Erfindung kann es jedoch auch vorgesehen sein, dass die Reibtrommel über eine Antriebswelle mit einer weiteren Reibtrommel gekoppelt ist, die über eine weitere Betätigungseinrichtung gegen das Straßen-Antriebsrad auf der gegenüberliegenden Seite des Fahrzeugs synchron mit der ersten Reibtrommel angestellt werden kann.

Hierdurch ergibt sich der Vorteil, dass beim Einsatz von lediglich einem einzigen Reversiergetriebe und Reibtrommelgetriebe im Wesentlichen die doppelte Antriebsleistung über die beiden Reibtrommeln von den Antriebsrädern abgegriffen werden kann, sodass auch bei herabgesetzten Reibungskoeffizienten zwischen der vorzugsweise rauen Reibtrommeloberfläche und dem Straßen-Antriebsrad, insbesondere bei Regen, eine ausreichende Fahrgeschwindigkeit sowohl in Vorwärtsrichtung, als auch in Rückwärtsrichtung, erzielbar ist.

In gleicher Weise kann es vorgesehen sein, an jedem der beiden hinteren Straßen-Antriebsräder des Fahrzeugs eine eigene Antriebseinheit mit Reversiergetriebe vorzusehen, um die beiden Schienenräder am hinteren Teil des Fahrzeugs in der zweiten Betriebsstellung getrennt anzutreiben. Hierdurch ergibt sich der Vorteil, dass die Antriebsleistung über das Differenzialgetriebe des Fahrzeugs auf die Schienen-Antriebsräder verteilt wird, wobei gegebenenfalls die Vorteile einer vorhandenen Antischlupfregelung des Hauptantriebs des Zweiwegefahrzeugs mit ausgenutzt werden können.

In gleicher Weise besteht jedoch die Möglichkeit lediglich eine Antriebseinheit an einem der beiden Straßen-Antriebsräder des Fahrzeugs vorzusehen, und die Schienenräder über eine gemeinsame Antriebswelle miteinander zu koppeln.

Die Erfindung wird nachfolgend mit Bezug auf die Zeichnungen anhand von bevorzugten Ausführungsformen beschrieben.

In den Zeichnungen zeigen
- Fig. 1: eine schematische Seitendarstellung eines Zweiwege-Lastkraftwagens, bei dem sich die erfindungsgemäße Antriebseinheit am Hinterrad befindet und durch die Betätigungseinrichtung in die Betriebsstellung für den Schienenbetrieb verschwenkt ist,
- Fig. 2: eine teilweise Aufsicht auf den Zweiwege-Lastkraftwagen von Fig. 1, bei dem sowohl am rechten hinteren Straßen-Antriebsrad, als auch am linken hinteren Straßen-Antriebsrad getrennte erfindungsgemäße Antriebseinrichtungen angeordnet sind,
- Fig. 3: eine vergrößerte Detaildarstellung des hinteren Teils eines erfindungsgemäßen Zweiwegefahrzeuges mit einer erfindungsgemäßen Antriebseinrichtung in der ersten Betriebsstellung für den Straßenbetrieb,
- Fig. 4: eine Darstellung des Zweiwegefahrzeugs von Fig. 3 beim Verschwenken der erfindungsgemäßen Antriebseinrichtung von der ersten Betriebsstellung für den Straßenbetrieb in die zweite Betriebsstellung für den Schienenbetrieb,
- Fig. 5: eine schematische Darstellung des Zweiwegefahrzeuges von Fig. 4 und 5, bei der die Antriebseinrichtung in die zweite Betriebsstellung für den Schienenbetrieb verschwenkt ist, und
- Fig. 6: eine Detaildarstellung der erfindungsgemäßen Antriebseinrichtung zur Verdeutlichung der darin angeordneten Zahnräder.

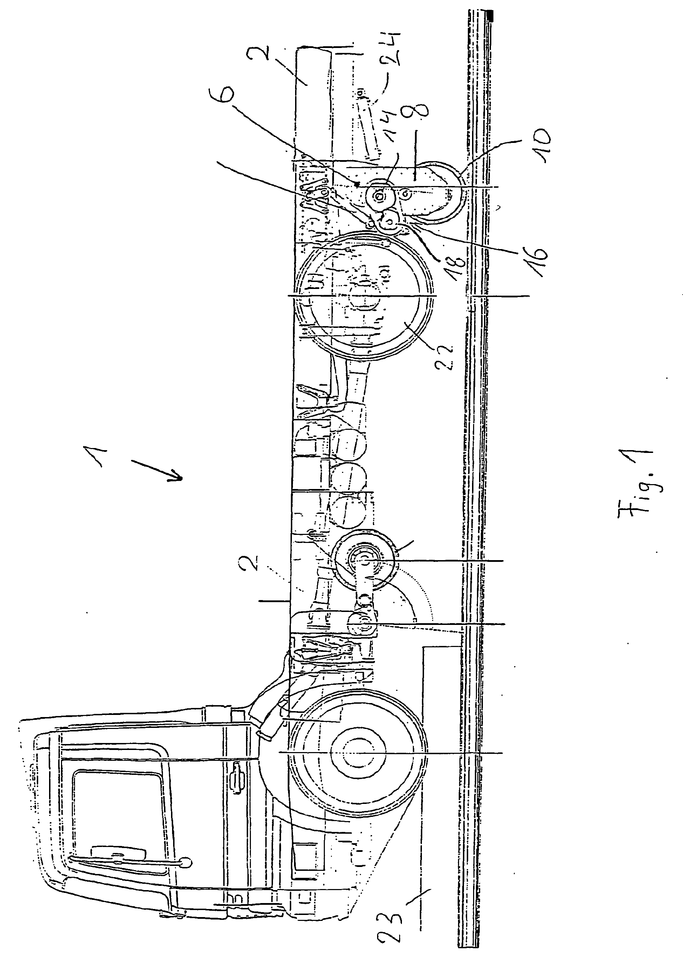

Wie in Fig. 1 gezeigt ist, umfasst ein erfindungsgemäßes Zweiwegefahrzeug 1 in Form eines Zweiwege-LKW's einen Rahmen 2, an dessen in Fahrtrichtung betrachtet hinterem Ende eine erfindungsgemäße Antriebseinrichtung 4 zum Antrieb des Fahrzeugs 1 beim Schienenbetrieb angeordnet ist.

Die Antriebseinrichtung 4 umfasst hierbei ein um eine erste Schwenkachse 6 schwenkbares Reversiergetriebegehäuse 8, an dessen der ersten Schwenkachse 6 gegenüberliegendem Ende ein Schienen-Antriebsrad 10 drehbar gelagert ist, mit dessen Hilfe sich das Zweiwegefahrzeug 1 im Schienenbetrieb vorwärts bewegt.

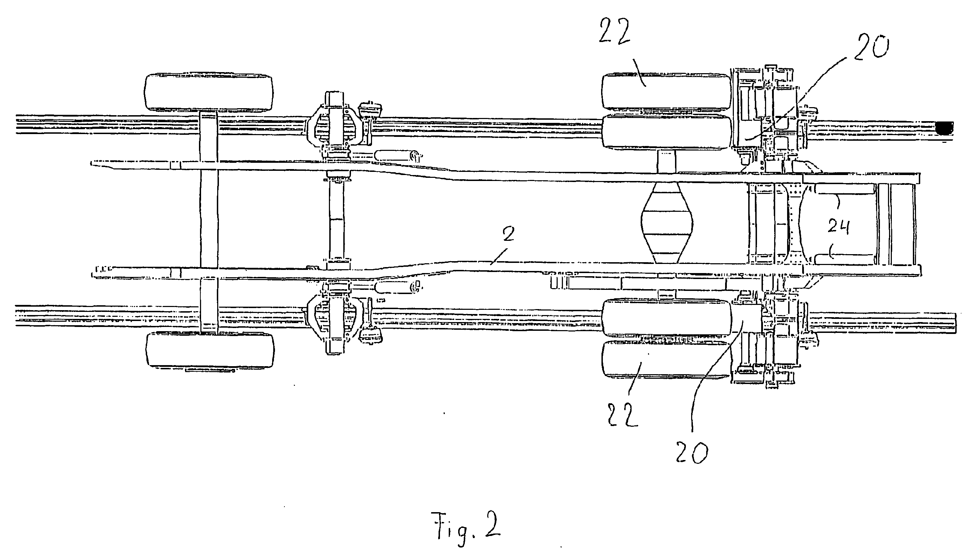

Das Schienen-Antriebsrad 10 ist über ein im Reversiergetriebegehäuse 8 enthaltenes, und in Fig. 6 im Detail schematisch gezeigtes, nicht näher bezeichnete Zahnräder enthaltendes Reversiergetriebe 12 sowie ein um eine zweite Schwenkachse 14 verschwenkbares Reibtrommelgetriebe 16 antriebsmäßig mit einer in Fig. 2 näher dargestellten Reibtrommel 20 gekoppelt. Das Reibtrommelgetriebe 16 umfasst hierbei vorzugsweise zwei nicht näher bezeichnete Zahnräder, die kämmend in einem Reibtrommelgetriebegehäuse 18 angeordnet sind, welches um die zweite Schwenkachse 14, die vorzugsweise mit der Antriebsachse des Reversiergetriebes 12 zusammenfällt, verschwenkbar ist.

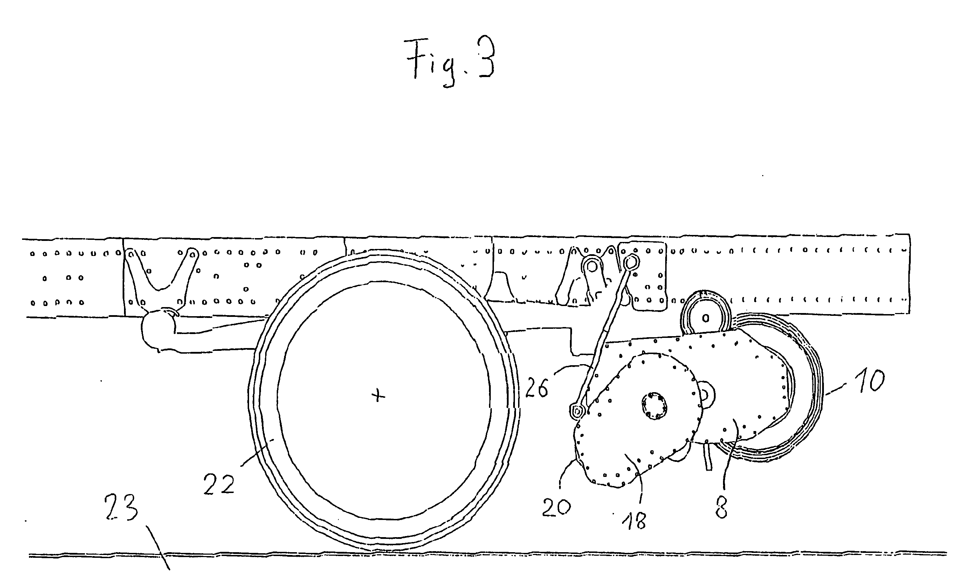

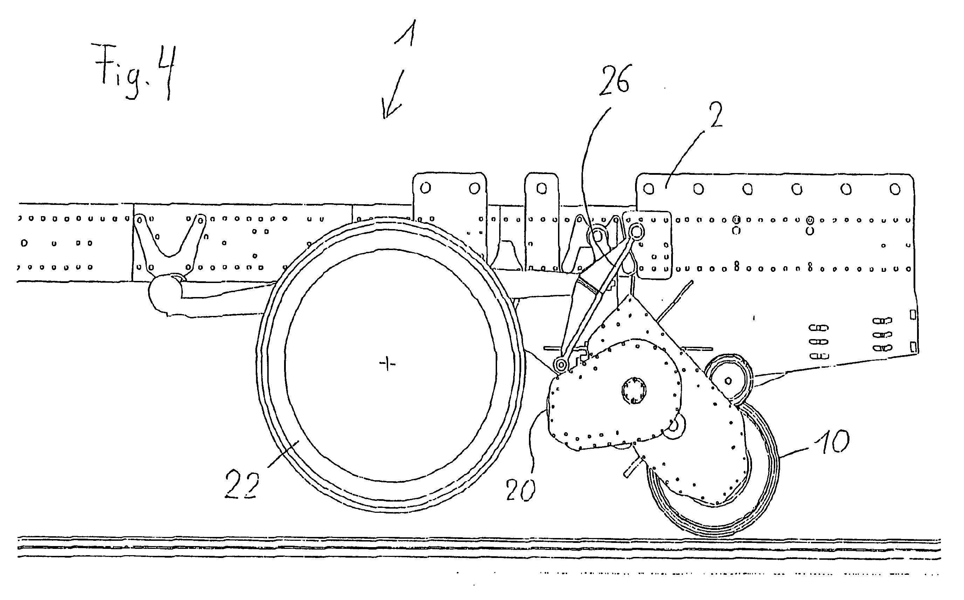

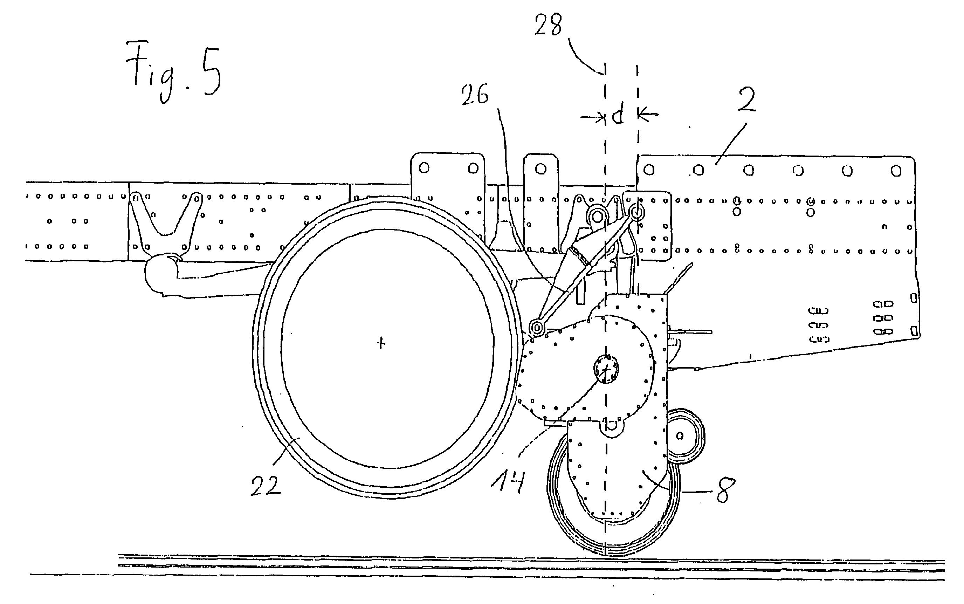

Wie weiterhin den Figuren 3 bis 5 entnommen werden kann, ist das Reversiergetriebegehäuse 8 mit dem daran um die zweite Schwenkachse 14 verschwenkbar aufgenommenen Reibtrommelgetriebegehäuse 18 aus einer in Fig. 3 dargestellten ersten Betriebsstellung für den Straßenbetrieb, bei welchem die Straßen-Antriebsräder 22 des Fahrzeuges mit dem Boden 23 in Kontakt sind, über eine Betätigungseinrichtung 24 in Form eines Hydraulikzylinders oder Pneumatikzylinders über die in Fig. 4 gezeigte Zwischenposition in die zweite, in den Figuren 1 und 5 dargestellte Betriebsstellung für den Schienenbetrieb verschwenkbar. Die Betätigungseinrichtung 24 ist aus Gründen der Übersichtigkeit in den Figuren teilweise nicht mit dargestellt.

Um beim Verschwenken des Reversiergetriebegehäuses 8 aus der in Fig. 3 dargestellten ersten Betriebsstellung für den Straßenbetrieb in die in Fig. 5 dargestellte zweite Betriebsstellung für den Schienenbetrieb gleichzeitig ein Anstellen der Reibtrommel 20 an das zugehörige Straßen-Antriebsrad 22 zu erhalten, stützt sich das Radtrommel-Getriebegehäuse 18 über ein Zugelement 26 gelenkig am Rahmen 2 des Zweiwegefahrzeugs 1 ab. Der Angriffspunkt des Zugelements 26 ist hierbei in der zweiten Betriebsstellung (Fig. 5) mit im Wesentlichen vertikal ausgerichtetem Reversiergetriebegehäuse 8 in einem Abstand d von wenigen Zentimetern jenseits einer gedachten vertikalen Linie 28 angeordnet, die durch die zweite Schwenkachse 14 verläuft.

Bei einer längenveränderlichen Ausgestaltung des Zugelements 26, beispielsweise durch Einsatz bekannter Gewindeabschnitte, Gewindeköpfe und dergleichen, am Zugelement 26, kann in der zweiten Betriebsstellung für den Schienenbetrieb die Position der Reibtrommel 20 relativ zur Umfangsoberfläche des Straßen-Antriebsrades 22 verändert werden, so dass durch eine entsprechende Verkürzung oder Verlängerung des Zugelements 26 die Anpresskraft zwischen Reibtrommel und Straßen-Antriebsrad 22, und damit die Reibkraft, eingestellt werden kann.

Wie weiterhin der Darstellung von Fig. 2 entnommen werden kann, ist sowohl am rechten Straßen-Antriebsrad 22 sowie auch am linken Straßen-Antriebsrad 22 des erfindungsgemäßen Zweigefahrzeugs eine erfindungsgemäße Antriebseinheit 4 vorgesehen, wobei die Betätigungseinrichtungen 24 zum Verschwenken des Reversiergetriebegehäuses 8 und Reibtrommel-Getriebegehäuses 18 zur Anstellung der Reibtrommeln 20 an die Straßen-Antriebsräder 22 zwischen den nicht näher bezeichneten Längszügen des Rahmens 2 angeordnet sind.

### Liste der Bezugszeichenliste

- 1: Zweiwege-LKW
- 2: Rahmen
- 4: Antriebseinrichtung für den Schienenbetrieb
- 6: erste Schwenkachse
- 8: Reversiergetriebegehäuse
- 10: Schienen-Antriebsrad
- 12: Reversiergetriebe
- 14: 2. Schwenkachse
- 16: Reibtrommelgetriebe
- 18: Reibtrommeloetriebegehäuse
- 20: Reibtrommel
- 22: Straßen-Antriebsrad
- 23: Boden / Straße
- 24: Betätigungseinrichtung
- 26: Zugelement
- d: Abstand
- 28: gedachte vertikale Linie

## Patentansprüche

1. Zweiwegefahrzeug (1), insbesondere Zweiwege-Lastkraftwagen, mit einer Antriebseinrichtung (4) für den Schienenbetrieb, welche ein Schienen-Antriebsrad (10) sowie eine mit dem Schienen-Antriebsrad (10) über ein Getriebe (12, 16) gekoppelte Reibtrommel (20) umfasst, die zum Antrieb des Fahrzeugs (2) beim Schienenbetrieb durch eine Betätigungseinrichtung (24) aus einer ersten Betriebsstellung für den Straßenbetrieb in eine zweite Betriebsstellung für den Schienenbetrieb an die Umfangsoberfläche eines Straßen-Antriebsrades (22) des Zweiwegefahrzeugs (1) anstellbar ist,
**dadurch gekennzeichnet,**
**dass** das Getriebe ein mechanisches Reversiergetriebe (12) enthält, welches bei vorgegebener Drehrichtung des Straßen-Antriebsrades (22) eine Umkehr der Drehrichtung des Schienen-Antriebsrades (10) für die Vorwärtsfahrt oder die Rückwärtsfahrt des Fahrzeugs (1) ermöglicht.

2. Zweiwegefahrzeug nach Anspruch 1,
**dadurch gekennzeichnet,**
**dass** die Antriebseinrichtung (4) ein um eine erste Schwenkachse (6) schwenkbares, das Reversiergetriebe (12) enthaltendes Reversiergetriebegehäuse (8) sowie ein gegenüber dem Reversiergetriebegehäuse (8) um eine zweite Schwenkachse (14) schwenkbares Reibtrommelgetriebegehäuse (18) umfasst, in welchem ein Reibtrommelgetriebe (16) zur Übertragung der Antriebsleistung von der Reibtrommel (20) auf das Reversiergetriebe (12) angeordnet ist.

3. Zweiwegefahrzeug nach Anspruch 2,
**dadurch gekennzeichnet,**
**dass** sich das Reibtrommelgetriebegehäuse (18) über ein mit diesem gelenkig verbundenes Zugelement (26) am Rahmen (2) des Zweiwegefahrzeugs (1) abstützt, derart, dass die Reibtrommel (20) bei einem Verschwenken des Reversiergetriebegehäuses (8) in die zweite Betriebsstellung an das Straßen-Antriebsrad (22) angestellt wird.

4. Zweiwegefahrzeug nach Anspruch 3,
**dadurch gekennzeichnet,**
**dass** das Zugelement (26) zur Veränderung der Anstellkraft, mit der die Reibtrommel (20) in der ersten Betriebsstellung durch die Betätigungseinrichtung (24) an das Straßen-Antriebsrad (22) angestellt wird, längenveränderlich ausgebildet ist.

5. Zweiwegefahrzeug nach einem der Ansprüche 2 bis 4,
**dadurch gekennzeichnet,**
**dass** die Betätigungseinrichtung (24) einen Hydraulikzylinder umfasst, der sich mit seinem einen Ende am Fahrzeugrahmen (2) abstützt, und der mit seinem anderen Ende gelenkig mit dem Reversiergetriebegehäuse (18) gekoppelt ist, um das Reversiergetriebegehäuse (18) zu verschwenken.

6. Zweiwegefahrzeug nach einem der vorhergehenden Ansprüche,
**dadurch gekennzeichnet,**
**dass** die Antriebseinrichtung (4) zentral oder in Höhe des Straßen-Antriebsrades (22) am Fahrzeug (1) angeordnet ist.

7. Zweiwegefahrzeug nach Anspruch 6,
**dadurch gekennzeichnet,**
**dass** eine weitere, durch die Antriebseinrichtung (4) angetriebene Reibtrommel (20) vorgesehen ist, die beim Schienenbetrieb an ein weiteres Straßen-Antriebsrad (20) des Fahrzeugs anstellbar ist.

8. Zweiwegefahrzeug nach Anspruch 7,
**dadurch gekennzeichnet,**
**dass** die weitere Reibtrommel (20) mit der Antriebseinheit (4) über eine Antriebswelle gekoppelt ist.

9. Zweiwegefahrzeug nach Anspruch 8,
**dadurch gekennzeichnet,**
**dass** die weitere Reibtrommel (20) über die Antriebswelle unmittelbar mit der Reibtrommel (20) gekoppelt ist, und mit Hilfe von am Fahrzeugrahmen (2) schwenkbar gelagerten Schwenkarmen sowie eine weitere Betätigungseinrichtung (24) synchron zur ersten Reibtrommel (20) verschwenkt wird.

10. Zweiwegefahrzeug nach einem der vorhergehenden Ansprüche,
**dadurch gekennzeichnet,**
**dass** das Reversiergetriebe (12) in der ersten und in der zweiten Drehrichtung des Schienen-Antriebsrades (10) im Wesentlichen das gleiche Untersetzungsverhältnis aufweist.

## Claims

1. Road-rail vehicle (1), in particular heavy goods road-rail vehicle, comprising a drive device (4) for operating on rails, said drive device having a rail driving wheel (10) as well as a friction drum (20) which is coupled with the rail driving wheel (10) via a gear (12, 16) and, in order to drive the vehicle (2) during an operation on rails, may be placed against the peripheral surface of a road driving wheel (22) of the road-rail vehicle (1) by an actuating device (24), moving from a first operating position for roads into a second operating position for rails, **characterised in that** the gear contains a mechanical reversing gear (12) which, for a predetermined rotational direction of the road driving wheel (22), allows a reversal of the rotational direction of the rail driving wheel (10) for the forward or reverse travel of the vehicle (1).

2. Road-rail vehicle according to claim 1, **characterised in that** the drive device (4) comprises a reversing gear housing (8) containing the reversing gear (12) and being pivotal about a first swivel pin (6) as well as a friction drum gear housing (18) which may be pivoted about a second swivel pin (14) with respect to the reversing gear housing (8) and in which a friction drum gear (16) is positioned for transferring the driving power from the friction drum (20) to the reversing gear (12).

3. Road-rail vehicle according to claim 2, **characterised in that** the friction drum gear housing (18) is supported on the frame (2) of the road-rail vehicle (1) via a traction element (26) articulated therewith, such that the friction drum (20) engages on the road driving wheel (22) when the reversing gear housing (8) is pivoted into the second operating position.

4. Road-rail vehicle according to claim 3, **characterised in that** the traction element (26) is configured to be variable in length for varying the engaging force with which the friction drum (20) is engaged on the road driving wheel (22) in the first operating position by the actuating device (24).

5. Road-rail vehicle according to any one of claims 2 to 4, **characterised in that** the actuating device (24) comprises a hydraulic cylinder which is supported at one end on the vehicle frame (2) and is articulated at its other end with the reversing gear housing (18) to pivot the reversing gear housing (18).

6. Road-rail vehicle according to any one of the preceding claims, **characterised in that** the drive device (4) is positioned on the vehicle (1) centrally or at the height of the road driving wheel (22).

7. Road-rail vehicle according to claim 6, **characterised in that** a further friction drum (20) is provided which is driven by the drive device (4) and which may be engaged on a further road driving wheel (20) of the vehicle during rail operation.

8. Road-rail vehicle according to claim 7, **characterised in that** the further friction drum (20) is coupled with the drive unit (4) via a drive shaft.

9. Road-rail vehicle according to claim 8, **characterised in that** the further friction drum (20) is directly coupled with the friction drum (20) via the drive shaft and is pivoted synchronously to the first friction drum (20) by pivot arms mounted pivotally on the vehicle frame (2) as well as via a further actuating device (24).

10. Road-rail vehicle according to any one of the preceding claims, **characterised in that** the reversing gear (12) substantially has the same reduction ratio in the first and second rotational directions of the rail driving wheel (10).

## Revendications

1. Véhicule rail-route (1) en particulier camion rail-route, comprenant un dispositif d'entraînement (4) pour le mode rail, qui comprend une roue d'entraînement pour le rail (10) et un tambour de frottement (20) couplé à la roue d'entraînement pour le rail (10) au moyen d'un engrenage (12, 16), lequel tambour peut être placé pour l'entraînement du véhicule (2) pour le mode rail par un dispositif d'actionnement (24) depuis une première position de service pour le mode route dans une seconde position de service pour le mode rail sur la surface périphérique d'une roue d'entraînement pour route (22) du véhicule rail-route (1),
**caractérisé en ce que**
l'engrenage contient un engrenage réversible (12) mécanique, qui permet, pour un sens de rotation prédéfini de la roue d'entraînement pour route (22), une inversion du sens de rotation de la roue d'entraînement pour le rail (10) pour la marche avant ou la marche arrière du véhicule (1).

2. Véhicule rail-route selon la revendication 1,
**caractérisé en ce que**
le dispositif d'entraînement (4) comprend un boîtier d'engrenage réversible (8) pouvant pivoter autour d'un premier axe de pivotement (6) et contenant l'engrenage réversible (12), ainsi qu'un boîtier d'engrenage de tambour de frottement (18) pouvant pivoter par rapport au boîtier d'engrenage réversible (8) autour d'un second axe de pivotement (14), dans lequel est disposé un boîtier de tambour de frottement (16) pour la transmission de la puissance d'entraînement du tambour de frottement (20) à l'engrenage réversible (12).

3. Véhicule rail-route selon la revendication 2,
**caractérisé en ce que**
le boîtier d'entraînement du tambour de frottement (18) s'appuie, au moyen d'un élément de traction (26) relié de façon articulée à ce boîtier, sur le cadre (2) du véhicule rail-route (1) de telle sorte que le tambour de frottement (20) est placé, lors d'un pivotement du boîtier d'engrenage réversible (8) dans la seconde position de service, sur la roue d'entraînement pour route (22).

4. Véhicule rail-route selon la revendication 3,
**caractérisé en ce que**
l'élément de traction (26) est réalisé variable en longueur pour modifier la force d'application, avec laquelle le tambour de frottement (20) est placé dans la première position de service par le dispositif d'actionnement (24) sur la roue d'entraînement pour route (22).

5. Véhicule rail-route selon l'une quelconque des revendications 2 à 4,
**caractérisé en ce que**
le dispositif d'actionnement (24) comprend un vérin hydraulique qui s'appuie par l'une de ses extrémités sur le châssis du véhicule (2), et qui est couplé par son autre extrémité de façon articulée au boîtier d'engrenage réversible (18), afin de pivoter le boîtier d'engrenage réversible (18).

6. Véhicule rail-route selon l'une quelconque des revendications précédentes,
**caractérisé en ce que**
le dispositif d'entraînement (4) est disposé de façon centrale ou à la hauteur de la roue d'entraînement pour route (22) sur le véhicule (1).

7. Véhicule rail-route selon la revendication 6,
**caractérisé en ce que**
un autre tambour de frottement (20) entraîné par le dispositif d'entraînement (4) est prévu, lequel, dans le mode rail, peut être placé sur une autre roue d'entraînement pour route (20) du véhicule.

8. Véhicule rail-route selon la revendication 7,
**caractérisé en ce que**
l'autre tambour de frottement (20) est couplé par un arbre d'entraînement avec l'unité d'entraînement (4).

9. Véhicule rail-route selon la revendication 8,
**caractérisé en ce que**
l'autre tambour de frottement (20) est couplé par l'arbre d'entraînement directement avec le tambour de frottement (20), et est pivoté de façon synchrone par rapport au premier tambour de frottement (20) à l'aide de bras pivotants logés de façon pivotante sur le châssis du véhicule (2) et d'un autre dispositif d'actionnement.

10. Véhicule rail-route selon l'une quelconque des revendications précédentes,
**caractérisé en ce que**
l'engrenage réversible (12) présente sensiblement le même rapport de réduction dans le premier et dans le second sens de rotation de la roue d'entraînement pour rail (10).
